# EUROPEAN PATENT APPLICATION

(11) **EP 4 814 329 A1**
(43) Date of publication of application: **30.09.2026**
(21) Application number: 24894207.0
(22) Date of filing: 21.11.2024
(51) Int. Cl.: F16C 33/76, A61C 1/05

(54) **BEARING**

(30) Priority: 24.11.2023 US 202363602484 P
(71) Applicant: Minebea Mitsumi Inc., Kitasaku-gun, Nagano 3890293 (JP)
(72) Inventor: YAMASAKI, Masaru, Kitasaku-gun, Nagano 389-0293 (JP); KATO, Shogo, Kitasaku-gun, Nagano 389-0293 (JP)
(74) Representative: Winter, Brandl - Partnerschaft mbB
(86) International application number: PCT/JP2024/041336
(87) International publication number: WO 2025/110216

(57) **Abstract**

A ball bearing (5) is a bearing configured to support a shaft member (7) provided with a turbine blade (8) configured to receive compressed air from an air supply port (9). The ball bearing (5) includes an inner ring (10), an outer ring (20), a plurality of rolling elements (30), and a retainer (31). In addition, the ball bearing (5) includes a sealing member (40) having an annular shape around an axis (x) and provided so as to be able to close a space between the inner ring (10) and the outer ring (20). The sealing member (40) includes a support ring (42) for supporting the sealing member (40) at an outer peripheral side. A seal-opposed groove (11) having a seal contact surface (13), a recess part (14), and a protrusion part (12) is formed at an outer peripheral surface (10b) of the inner ring (10). The seal contact surface (13) is capable of being contacted by an inner peripheral end part (41a) of the sealing member (40) from an outer side in the axis (x) direction. The recess part (14) extends in the axis (x) direction at least in a region opposed to the support ring (42) in a radial direction.

## Description

### Technical Field

The present invention relates to a bearing, and more particularly to a bearing used in a dental handpiece driven by an air turbine.

### Background Art

Conventionally, a dental handpiece has been used in treatments of dentists or the like. A dental handpiece includes a head including a rotation mechanism, and a tool detachably attached to the head. In the rotation mechanism, both ends of a shaft member are supported by bearings, and a turbine blade is attached to the shaft member. A ball bearing including an inner ring, an outer ring, and a retainer configured to retain a plurality of rolling elements (balls) interposed between the inner ring and the outer ring is used as the bearing. Compressed air can be supplied to the turbine blade from a supply path, and the compressed air is blown against the turbine blade of the rotation mechanism, so that the turbine blade rotates, the shaft member rotates, and the tool rotates.

Among bearings used in conventional dental handpieces, there is, for example, a bearing having a brake function as disclosed in Patent Document 1. Specifically, an annular seal ring is fixed to an outer ring of the bearing, an end part of an inner peripheral side of the seal ring is capable of contacting an inner ring of the bearing, and when supply of compressed air is stopped, the end part of the inner peripheral side of the seal ring contacts the inner ring of the bearing, a braking force is applied to the inner ring, and rotation of the inner ring is stopped.

### Citation List

### Patent Literature

Patent Document 1: German Patent Application Publication No. 102012000757 specification

### Summary of Invention

### Technical Problem

A bearing having a brake function used in the above-described dental handpiece is required to have a configuration enabling higher-speed rotation.

The present invention has been made in view of the above-described problems, and an object of the present invention is to provide a bearing enabling higher-speed rotation.

### Solution to Problem

In order to achieve the above object, a bearing according to the present invention is a bearing configured to support a shaft member provided with a turbine blade configured to rotate by receiving compressed air, and includes an inner ring, an outer ring installed at an outer peripheral side of the inner ring, a plurality of rolling elements interposed between the inner ring and the outer ring, a retainer configured to retain the rolling elements with gaps in a circumferential direction, and a sealing member having an annular shape around an axis x and provided between the inner ring and the outer ring so as to be able to close a space between the inner ring and the outer ring. The sealing member includes a support ring, the support ring being an annular member for supporting the sealing member at an outer peripheral side, a seal-opposed groove having a seal contact surface, a recess part, and a protrusion part is formed at an outer peripheral surface facing the outer peripheral side of the inner ring, the seal contact surface is capable of being contacted by an end part of an inner peripheral side of the sealing member from an outer side in the axial direction, and the recess part extends in the axial direction at least in a region opposed to the support ring in a radial direction.

### Advantageous Effects of Invention

The bearing according to the present invention can enable higher-speed rotation.

### Brief Description of Drawings

FIG. 1 is an external view of an example of a dental handpiece including a bearing according to the present invention.
FIG. 2 is a cross-sectional view schematically illustrating an example of a head part of the dental handpiece illustrated in FIG. 1.
FIG. 3 is a cross-sectional view illustrating a schematic configuration of an example of the bearing according to the present invention used in the head part illustrated in FIG. 2.
FIG. 4 is a partially enlarged view of the bearing illustrated in FIG. 3.
FIG. 5 is a partially enlarged view of the bearing illustrated in FIG. 3.
FIG. 6 is a partially enlarged cross-sectional view illustrating a schematic configuration of another example of the bearing according to the present invention used in the head part illustrated in FIG. 2.

### Description of Embodiments

Embodiments of the present invention will be described below with reference to the drawings. In the drawings, a plurality of components are not all provided with reference signs, and reference signs may be omitted for some of the plurality of components.

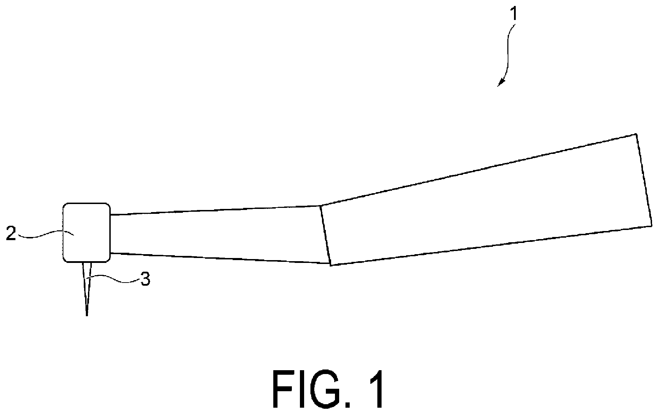

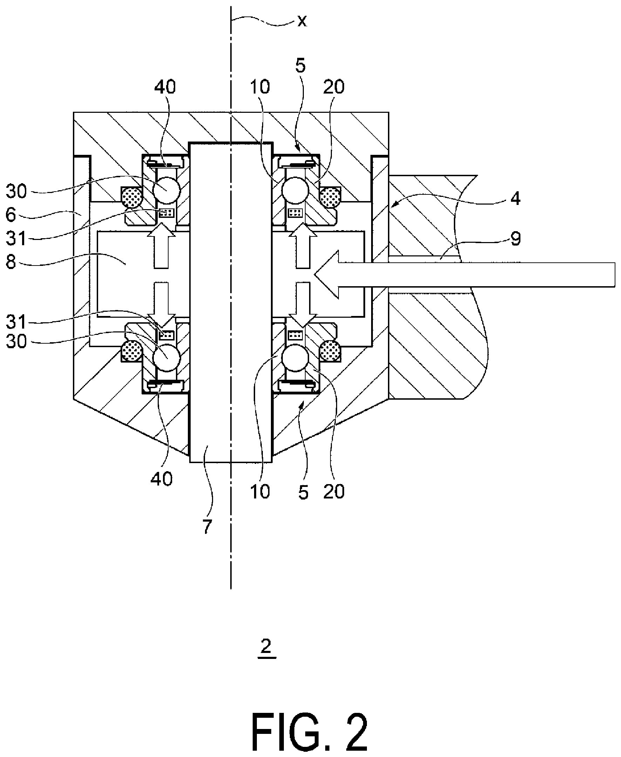

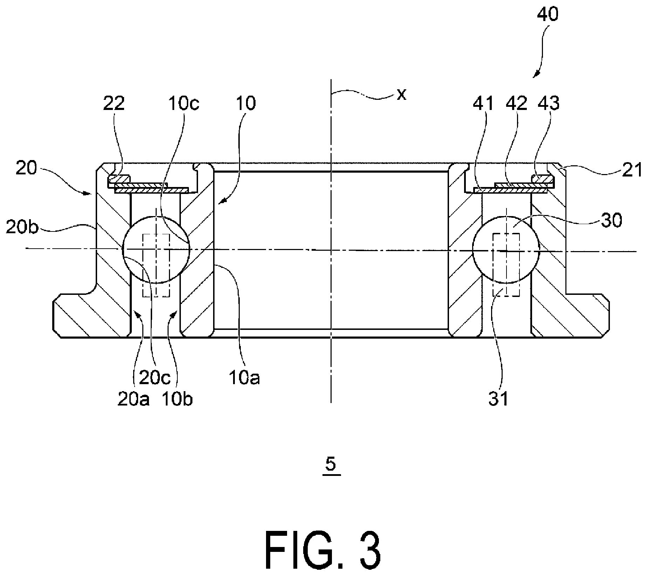

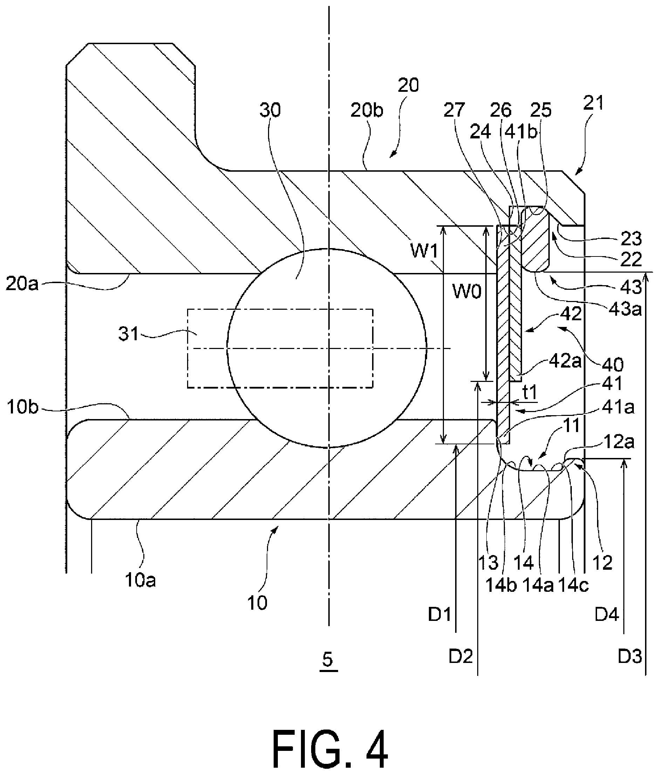

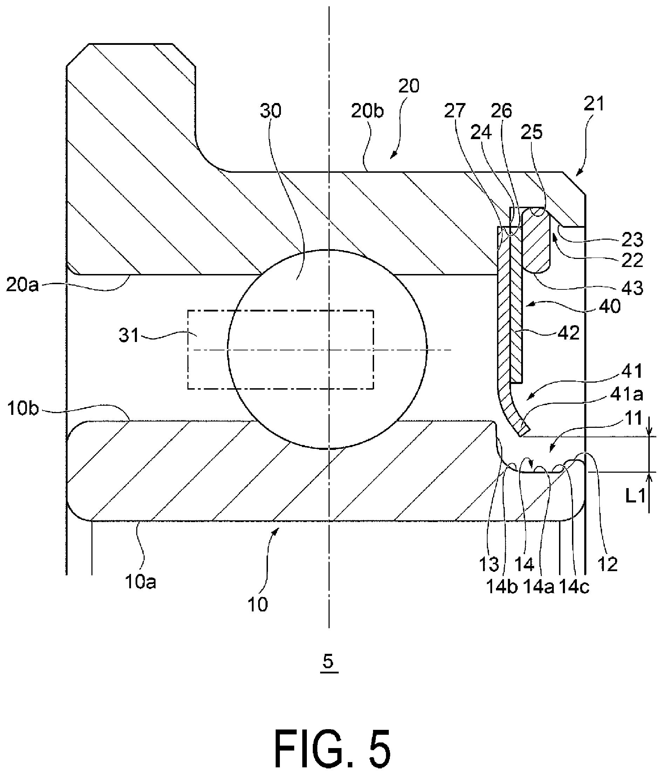

A bearing according to an embodiment of the present invention is a ball bearing for highspeed rotation used in a dental handpiece. FIG. 1 is an external view of a dental handpiece 1 as an example of a dental handpiece including a bearing according to the present invention, FIG. 2 is a cross-sectional view schematically illustrating a head part 2 as an example of a head part of the dental handpiece 1, and FIG. 3 is a cross-sectional view illustrating a schematic configuration of a ball bearing 5 as an example of a bearing according to the present invention used in the head part 2. In addition, FIGS. 4 and 5 are partially enlarged views of the ball bearing 5 illustrated in FIG. 3. It should be noted that FIG. 4 illustrates the ball bearing 5 in the dental handpiece 1 in a stopped state, and FIG. 5 illustrates the ball bearing 4 in the dental handpiece 1 in a driven state. Note that the stopped state is a state where compressed air does not act on a sealing member and the sealing member is not deformed by an action of compressed air, as described below. In addition, the driven state is a state where compressed air acts on the sealing member, and the sealing member is deformed.

As illustrated in FIGS. 1 and 2, the dental handpiece 1 includes a head part 2 including a rotation mechanism 4, and a tool 3 detachably attached to the head part 2. When the dental handpiece 1 is used, the tool 3 is rotated at high speed (for example, 400000 revolutions per minute or more) to cut a tooth, or the like.

As illustrated in FIG. 2, the head part 2 of the dental handpiece 1 includes a housing 6, in addition to the rotation mechanism 4. The housing 6 accommodates the rotation mechanism 4. As illustrated in FIG. 2, the rotation mechanism 4 includes a shaft member 7, a pair of ball bearings 5, a turbine blade 8, and an air supply port 9. The tool 3 is detachably attached to the shaft member 7. The shaft member 7 is present in an axis x direction, and is rotatably supported by the housing 6 at both end parts via the pair of ball bearings 5. Note that the axis x is an axis of the ball bearing 5. Further, the turbine blade 8 is attached to the shaft member 7 between the pair of ball bearings 5. By supplying compressed air from the air supply port 9 to the turbine blade 8, the turbine blade 7 can be rotated at high speed. As a result, the shaft member 7 and the tool 3 rotate at high speed. Note that the shaft member 7 rotates about the axis x as a central axis or a substantially central axis.

As described above, the ball bearing 5 is a bearing configured to support the shaft member 7 provided with the turbine blade 8 configured to rotate by receiving compressed air supplied from the air supply port 9. The ball bearing 5 includes an inner ring 10, an outer ring 20 installed at an outer peripheral side of the inner ring 10, a plurality of rolling elements 30 interposed between the inner ring 10 and the outer ring 20, and a retainer 31 configured to retain the rolling elements 30 with gaps in a circumferential direction. In addition, the ball bearing 5 includes a sealing member 40 having an annular shape around the axis x and provided between the inner ring 10 and the outer ring 20 so as to be able to close a space between the inner ring 10 and the outer ring 20. The sealing member 40 includes a support ring 42. The support ring 42 is an annular member for supporting the sealing member 40 at an outer peripheral side. A seal-opposed groove 11 having a seal contact surface 13, a recess part 14, and a protrusion part 12 is formed at an outer peripheral surface 10b facing an outer peripheral side of the inner ring 10. The seal contact surface 13 is capable of being contacted by an inner peripheral end part 41a from an outer side in the axis x direction, the inner peripheral end part 41a being an end part of an inner peripheral side of the sealing member 40. The recess part 14 extends in the axis x direction at least in a region opposed to the support ring 42 in a radial direction. Hereinafter, the configuration of the ball bearing 5 will be specifically described.

Note that an outer side is one side in the axis x direction, and an inner side is the other side in the axis x direction. In the head part 2 of the dental handpiece 1, an inner side of the ball bearing 5 is a side close to the turbine blade 8 in the axis x direction, and an outer side of the ball bearing 5 is a side away from the turbine blade 8 in the axis x direction. In addition, a radial direction is a direction orthogonal to the axis x. In addition, an inner peripheral side is an inner side in the radial direction and is a side closer to the axis x in the radial direction, and an outer peripheral side is a side opposite to the inner peripheral side, is an outer side in the radial direction, and is a side away from the axis x in the radial direction.

As illustrated in FIGS. 2 to 4, the ball bearing 5 includes the inner ring 10 having a raceway groove 10c forming an inner ring raceway at an outer peripheral surface 10b, the outer ring 20 having a raceway groove 20c forming an outer ring raceway at an inner peripheral surface 20a, the plurality of rolling elements (balls) 30 interposed between the inner ring raceway and the outer ring raceway, and the annular retainer 31 configured to rotatably retain the rolling elements 30 with gaps in the circumferential direction. In addition, the ball bearing 5 includes the sealing member 40. The sealing member 40 is provided to prevent lubricant from leaking from an inside of the ball bearing 5 and to prevent foreign matter from entering the inside of the ball bearing 5. In addition, the sealing member 40 is provided as a brake mechanism for the rotation mechanism 4. As described above, the sealing member 40 is provided between the inner ring 10 and the outer ring 20 so as to be able to close a space between the inner ring 10 and the outer ring 20.

As illustrated in FIG. 3, an inner peripheral surface of the retainer 31 is opposed to the outer peripheral surface 10b of the inner ring 10, and an outer peripheral surface of the retainer 31 is opposed to the inner peripheral surface 20a of the outer ring 20. The retainer 31 is provided with a plurality of pockets (not illustrated) for retaining the rolling elements 30 in a freely rolling manner with regular or substantially regular gaps in the circumferential direction, and retains the rolling elements 30. As illustrated in FIG. 2, the outer ring 20 is fitted to the housing 6 at the outer peripheral surface 20b, and the shaft member 7 is fitted to the inner peripheral surface 10a of the inner ring 10. Specifically, in the head part 2, the pair of ball bearings 5 support the shaft member 7 with the turbine blade 8 interposed between the pair of ball bearings 5. In the ball bearing 5, the inner ring 10 and the outer ring 20 are rotatable relative to each other about the axis x. That is, when the dental handpiece 1 is driven, that is, when compressed air is supplied to the turbine blade 8, the inner ring 10 rotates at high speed with respect to the outer ring 20.

As illustrated in FIGS. 2 to 4, the sealing member 40 is provided in an open part between the inner ring 10 and the outer ring 20 at a side where compressed air having passed through the ball bearing 5 is discharged. That is, in each of the pair of ball bearings 5 opposed to each other with the turbine blade 8 interposed between the pair of ball bearings 5, the sealing member 40 is provided in an open part of an outer side between the inner ring 10 and the outer ring 20. As illustrated in FIGS. 3 and 4, the sealing member 40 includes a seal body 41, a support ring 42, and a snap ring 43. In addition, the sealing member 40 is fixed to an end part 21 of the outer ring 20. The end part 21 is an end part of an outer side in the axis x direction.

As illustrated in FIGS. 4 and 5, the seal body 41 has elasticity, is an elastically deformable member, and is a plate-shaped member having an annular shape around the axis x. In addition, the support ring 42 is, for example, a plate-shaped member having predetermined rigidity and having an annular shape around the axis x. An inner diameter D2 of the support ring 42 is larger than an inner diameter D1 of the seal body 41. In addition, the snap ring 43 is, for example, a member having elasticity and having an annular or substantially annular shape around the axis x. The snap ring 43 is a member for fixing the sealing member 40 to the outer ring 20 via the support ring 42. The snap ring 43 is, for example, a C-ring. As illustrated in FIGS. 3 and 4, the seal body 41, the support ring 42, and the snap ring 43 are stacked in the order of the snap ring 43, the support ring 42, and the seal body 41 from the outer side in the axis x direction, and are fixed to the end part 21 of the outer ring 20. Specifically, the seal body 41 and the support ring 42 are sandwiched between the end part 21 of the outer ring 20 and the snap ring 43 and fixed to the end part 21 of the outer ring 20 by the snap ring 43.

As illustrated in FIGS. 3 and 4, the seal body 41 is configured to contact the inner ring 10 at the end part of the inner peripheral side (inner peripheral end part 41a) when the dental handpiece 1 is stopped. As illustrated in FIG. 2, when compressed air is supplied from the air supply port 9 to the turbine blade 8, a part of the discharged air flows from an inside of the rotation mechanism 4, through the gap between the inner ring 10 and the outer ring 20 of the ball bearing 5, toward the seal body 41. That is, a part of the discharged air flows through the gap between the inner ring 10 and the outer ring 20 of each ball bearing 5 from an inner side toward an outer side and collides with the seal body 41 from the inner side. Due to an action of pressure of the discharged air, as illustrated in FIG. 5, the seal body 41 is deformed, the inner peripheral end part 41a of the seal body 41 is separated from the inner ring 10, and the air is discharged to the outside of the ball bearing 5.

Even when the supply of compressed air is stopped in order to stop the rotating tool 3, the turbine blade 8 and the shaft member 7 continue to rotate for a while by inertia, and thus, during this time, the inside of the ball bearing 5 is in a negative pressure state where a pressure is lower than a pressure in the outside of the ball bearing 5. Accordingly, air containing foreign matter may be sucked from the periphery of the dental handpiece 1 into the ball bearing 5 or the housing 6. The suction of air into the housing 6 when the dental handpiece 1 is stopped is called a suck-back phenomenon. The sealing member 40 is pressed against the inner ring 10 by the flow of air during the suck-back phenomenon, suppressing the suction of air from the outside and preventing the inflow of foreign matter. In addition, the sealing member 40 acts as a brake for the rotation mechanism 4 and applies a braking force to the inner ring 10 rotating by inertia. Accordingly, the sealing member 40 can shorten a time until the dental handpiece 1 is stopped.

As described above, the support ring 42 is in contact with a part of the outer peripheral side of the seal body 41 over an entire circumference around the axis x. Accordingly, when the seal body 41 receives pressure of compressed air, the seal body 41 can be prevented or suppressed from coming off from the outer ring 20. In addition, the support ring 42 reinforces contact between the inner peripheral end part 41a of the seal body 41 and the seal contact surface 13 of the inner ring 10. Accordingly, the support ring 42 can further increase a braking force of the brake function of the seal body 41.

The inner ring 10 and the outer ring 20 are formed of, for example, stainless steel, and the rolling elements 30 are formed of, for example, stainless steel or ceramic.

The sealing member 40 and the structure formed by the sealing member 40, the inner ring 10, and the outer ring 20 will be described in more detail.

As illustrated in FIGS. 3 and 4, the sealing member 40 is fixed to a seal groove 22 of the outer ring 20. The seal groove 22 is a groove recessed toward the outer peripheral surface 20b of the outer ring 20, and extends annularly around the axis x. As illustrated in FIG. 4, the seal groove 22 has an inclined surface 23, an annular surface 24, and a bottom surface 25. The inclined surface 23 is a surface having a tubular shape around the axis x, and is located outside the seal groove 22 in the axis x direction. The inclined surface 23 increases in diameter from the outer side toward the inner side in the axis x direction, and is inclined radially outward from the outer side toward the inner side in the axis x direction in a cross section. The annular surface 24 is a surface having an annular shape and extending along a plane orthogonal to the axis x, and faces outward in the axis x direction. The bottom surface 25 is an annular surface facing radially inward and extends between the inclined surface 23 and the annular surface 24.

In addition, as illustrated in FIG. 4, the seal groove 22 has a cylindrical surface 26 and an annular surface 27. The cylindrical surface 26 and the annular surface 27 form a step adjacent to the annular surface 24. The cylindrical surface 26 is a surface having a tubular shape around the axis x and expanding inward in the axis x direction from an end of an inner peripheral side of the annular surface 24. The cylindrical surface 26 is, for example, a surface having a cylindrical shape. The annular surface 27 is a surface having an annular shape and extending along a plane orthogonal to the axis x, and faces outward in the axis x direction. The annular surface 27 extends from an end of an inner side of the cylindrical surface 26.

As illustrated in FIG. 4, an end part of an outer peripheral side (outer peripheral end part 41b) of the seal body 41 is accommodated in the step formed by the cylindrical surface 26 and the annular surface 27, and is supported in contact with the cylindrical surface 26 and the annular surface 27. The snap ring 43 is in contact with the inclined surface 23, sandwiches the seal body 41 between the outer ring 20 and the snap ring 43 via the support ring 42, and fixes the seal body 41 and the support ring 42 to the seal groove 22.

The seal body 41 is a sheet-shaped member having an annular shape. The seal body 41 contains, as a base resin, at least one resin selected from fluororesin, fluororubber, nitrile rubber, hydrogenated nitrile rubber, acrylic rubber, ethylene propylene diene rubber, and the like. The base resin may be a resin. In the resin, a porous (such as a three dimensional network structure) resin is impregnated with an elastomer. Examples of the fluororesin include polytetrafluoroethylene and perfluoroelastomer. The fluororesin may be a composite of polytetrafluoroethylene and perfluoroelastomer so as to have sliding properties and elasticity. As the composite of polytetrafluoroethylene and perfluoroelastomer, for example, a composite obtained by curing liquid perfluoroelastomer impregnated into porous (such as a three dimensional network structure) polytetrafluoroethylene may be used. Examples of fluororubber include vinylidene fluoride-based, tetrafluoroethylene-propylene-based, and tetrafluoroethylene-perfluorovinyl ether-based fluororubbers.

A hardness of the seal body 41 is, for example, Shore A 60 to 90 (in accordance with JIS K 6253:2012), or Shore A 70 to 90 (in accordance with JIS K 6253:2012). A thickness T1 of the seal body 41 is, for example, 0.5 mm or less, 0.2 mm or less, or 0.1 mm or less. A radial length WO of a contact region between the seal body 41 and the support ring 42 is, for example, 1/2 or more and 3/4 or less or 2/3 or more and 3/4 or less of a radial width W1 of the seal body 41. With such hardness and dimensions, the seal body 41 is likely to be appropriately deformed during operation of an air turbine configured to supply compressed air (in a state where compressed air passes through the inside of the ball bearing 5).

A tear strength of the seal body 41 in accordance with JIS K 6252:2007 is not particularly limited, but is, for example, 50 N/mm or more, 65 N/mm or more, or 80 N/mm or more. In addition, a tensile strength of the seal body 41 in accordance with JIS K 6251:2010 is, for example, 30 MPa or more. With such tear strength and tensile strength, durability of the seal body 41 when the air turbine is repeatedly operated and stopped is further improved.

The support ring 42 is a member having an annular shape and made of metal or resin. The support ring 42 has a hardness higher than the hardness of the seal body 41. The snap ring 43 is a member made of metal or resin. The snap ring 43 has a structure. The structure generates an urging force toward a radially outer side. This urging force acts on the inclined surface 23 of the seal groove 22, whereby the snap ring 43 is urged inward in the axis x direction. As a result, as described above, the snap ring 43 presses the seal body 41 and the support ring 42 against the annular surface 27 of the outer ring 20. In the present example, the inner diameter D2 of the support ring 42 is larger than the inner diameter D1 of the seal body 41, and an inner diameter D3 of the snap ring 43 is larger than the inner diameter D2 of the support ring 42.

As illustrated in FIG. 4, the inner ring 10 has, at the outer peripheral side, the outer peripheral surface 10b, the raceway groove 10c for the rolling elements 30 to roll being formed on the outer peripheral surface 10b, and the seal-opposed groove 11 opposed to the sealing member 40. The seal-opposed groove 11 is a groove recessed toward the inner peripheral surface 10a of the inner ring 10, and extends annularly around the axis x.

As illustrated in FIG. 4, the seal-opposed groove 11 has the seal contact surface 13, the recess part 14, and the protrusion part 12. The seal contact surface 13 is a surface having an annular shape around the axis x and faces outward in the axis x direction. The seal contact surface 13 is continuous with the outer peripheral surface 10b at an end of an inner peripheral side. As illustrated in FIG. 4, when the air turbine is stopped (when the pressure of compressed air does not act), that is, when the dental handpiece 1 is in a stopped state, the seal contact surface 13 is in contact with the inner peripheral end part 41a of the seal body 41. In this way, in the stopped state of the dental handpiece 1, the seal body 41 not deformed by the action of compressed air is in contact with the seal contact surface 13 of the inner ring 10 from the outer side at the inner peripheral end part 41a. Note that, in the stopped state of the dental handpiece 1, the inner peripheral end part 41a of the seal body 41 may be urged toward the seal contact surface 13 of the inner ring 10, or may not be urged toward the seal contact surface 13 of the inner ring 10. That is, in the stopped state of the dental handpiece 1, the seal body 41 may be deformed and the inner peripheral end part 41a may be pressed against the seal contact surface 13, or the seal body 41 may not be deformed and the inner peripheral end part 41a may be in contact with the seal contact surface 13 without generating a reactive force.

As illustrated in FIG. 4, the recess part 14 extends outward in the axis x direction from the seal contact surface 13, and forms an annular groove recessed inward in the radial direction between the seal contact surface 13 and the protrusion part 12. The recess part 14 extends in the axis x direction in a region opposed to at least an end part of an inner peripheral side (inner peripheral end part 42a) of the support ring 42 when viewed in the radial direction, and the recess part 14 is opposed to at least the inner peripheral end part 42a of the support ring 42 when viewed in the radial direction. The recess part 14 preferably has, at least at a part, a cylindrical surface 14a extending in the axis x direction. The cylindrical surface 14a is, for example, a cylindrical surface or a substantially cylindrical surface having the axis x as a central axis or a substantially central axis. In one aspect of the present invention, as illustrated in FIG. 4, the recess part 14 includes the cylindrical surface 14a between an end part (inner side end part 14b) connected to the seal contact surface 13 and the protrusion part 12, and the cylindrical surface 14a is opposed to the inner peripheral end part 42a of the support ring 42 and an end part of an inner peripheral side (inner peripheral end part 43a) of the snap ring 43 in the radial direction. As an example, as illustrated in FIG. 4, the cylindrical surface 14a extends farther outward than the snap ring 43 in the axis x direction. In this manner, the recess part 14 extends in the axis x direction in the region opposed to the sealing member 40 in the radial direction, and thus a flow of discharged compressed air is less likely to be hindered. As a result, exhaust efficiency of the supplied compressed air can be improved, a flow rate of the compressed air supplied to the turbine blade 8 can be increased, and the ball bearing 5 can be rotated at a higher speed. Accordingly, the tool 3 can be rotated at a higher speed.

As illustrated in FIG. 4, the protrusion part 12 is a flange-shaped part connected to an end of an outer side of the recess part 14 in the axis x direction. The protrusion part 12 is located farther outward than the snap ring 43 in the axis x direction. An outer diameter D4 of the protrusion part 12 is smaller than the inner diameter D1 of the seal body 41. An end edge (end edge 12a) of an inner side of the protrusion part 12 in the axis x direction is formed with a curved surface. For example, in the cross section illustrated in FIG. 4, the end edge 12a of the protrusion part 12 draws a curve. The curve is convex toward the outer peripheral side and the inner side. As a result, the flow of discharged compressed air is further less likely to be hindered. On the other hand, when the suck-back phenomenon occurs, the flow of air stagnates around the protrusion part 12, and a part of the air flows toward the seal body 41. As a result, the inflow of air into the ball bearing 5 is suppressed when the suck-back phenomenon occurs. Accordingly, the suck-back phenomenon can be suppressed, and the amount of foreign matter entering the ball bearing 5 due to the suck-back phenomenon can be reduced. In addition, a time from stop of supply of compressed air to contact of the seal body 41 with the seal contact surface 13 can be shortened, and a time until the tool 3 is stopped can be shortened. In this manner, braking performance can be improved.

As illustrated in FIG. 5, an end part of an outer side (outer side end part 14c) of the recess part 14 in the axis x direction is preferably located farther outward than the inner peripheral end part 41a of the deformed seal body 41 in the axis x direction in a state where the dental handpiece 1 is driven (a state where the pressure of compressed air acts). In addition, a minimum distance L1 between the deformed seal body 41 and the recess part 14 or the protrusion part 12 is preferably larger than or equal to the thickness T1 of the seal body 41. Although the minimum distance L1 is a length in the radial direction between the deformed seal body 41 and the recess part 14 in the embodiment of the present invention illustrated in FIG. 5, the minimum distance L1 is not limited to the length. For example, the minimum distance L1 may be a length in the axis x direction. The minimum distance L1 is more preferably 1.2 times or more the thickness of the seal body 41. It is further preferable that a size of a gap between the deformed seal body 41 and the seal contact surface 13, the recess part 14 and the protrusion part 12 gradually increases towards the minimum distance L1. As described above, the length of the recess part 14 extending in the axis x direction is sufficiently long, and the gap between the seal body 41 and the recess part 14 or the protrusion part 12 is sufficiently large, so that the flow of discharged compressed air is further less likely to be hindered.

As described above, the material of the seal body 41 has a material property enabling the seal body 41 to be more easily deformable. In addition, the hardness and the dimensions of the seal body 41 are set to values enabling the seal body 41 to be more easily deformable. As a result, the seal body 41 is more easily deformable than a conventional seal body. Accordingly, in the dental handpiece 1 in the driven state, when compressed air acts on the seal body 41, the seal body 41 deforms to a greater extent, and the flow of compressed air passing through the ball bearing 5 and discharged to the outside of the head part 2 is further less likely to be hindered.

As described above, according to the ball bearing 5, the flow of compressed air passing through the ball bearing 5 and discharged to the outside of the head part 2 can be made further less likely to be hindered, and the number of rotations of the rotation mechanism 4 of the dental handpiece 1 in the driven state can be further increased.

In addition, as described above, the seal body 41 is more easily deformable than a conventional seal body. Therefore, in an inertial rotation state where the dental handpiece 1 is stopped and the turbine blade 8 and the shaft member 7 continue to rotate by inertia, when the inside of the ball bearing 5 becomes negative pressure, the seal body 41 can be more strongly pressed against the seal contact surface 13 by the negative pressure. Accordingly, even when the seal body 41 is worn over time, a decrease in braking performance of the seal body 41 can be suppressed. In this manner, according to the ball bearing 5, durability of the brake mechanism can be improved, and thus, a period for exhibiting desired braking performance can be extended. In addition, braking performance of the seal body 41 can be improved.

Further, for example, by adjusting the inner diameter D2 of the support ring 42, an operating region of the inner peripheral end part 41a of the seal body 41 when compressed air acts can be varied. As a result, the flow rate of compressed air passing through the ball bearing 5 and discharged to the outside of the head part 2 can be adjusted. For example, when the inner diameter D2 of the support ring 42 is increased, the inner peripheral end part 41a of the seal body 41 can be made to deform to a greater extent, and the flow amount of compressed air passing through the ball bearings 5 and discharged to the outside of the head part 2 can be increased. As a result, the rotation mechanism 4 of the dental handpiece 1 can be made to rotate at a higher speed in the driven state. On the other hand, when the inner diameter D2 of the support ring 42 is reduced, the number of rotations of the rotation mechanism 4 of the dental handpiece 1 can be reduced, and the braking performance of the seal body 41 can be improved.

As described above, according to the ball bearing 5, in adjusting the number of rotations and braking performance of the rotation mechanism 4 of the dental handpiece 1, it is only necessary to change the inner diameter D2 of the support ring 42, without requiring, as in the related art, changes in various configurations of the dental handpiece, such as changes in an internal structure of the bearing or a lubricant, design changes of the dental handpiece, or adjustment of a flow rate of compressed air, and the number of rotations and braking performance of the rotation mechanism 4 of the dental handpiece 1 can be easily adjusted.

As described above, the ball bearing 5 according to the embodiment of the present invention can enable higher-speed rotation.

Next, a ball bearing 5A as another example of the bearing according to the present invention will be described. The ball bearing 5A includes a seal-opposed groove 11A different from the seal-opposed groove 11, with respect to the ball bearing 5 described above. Hereinafter, with respect to the ball bearing 5A, configurations having the same or similar functions as the functions of the configurations of the ball bearing 5 described above are denoted by the same reference signs, and descriptions of the configurations are omitted, and only configurations different from the configurations of the ball bearing 5 will be described.

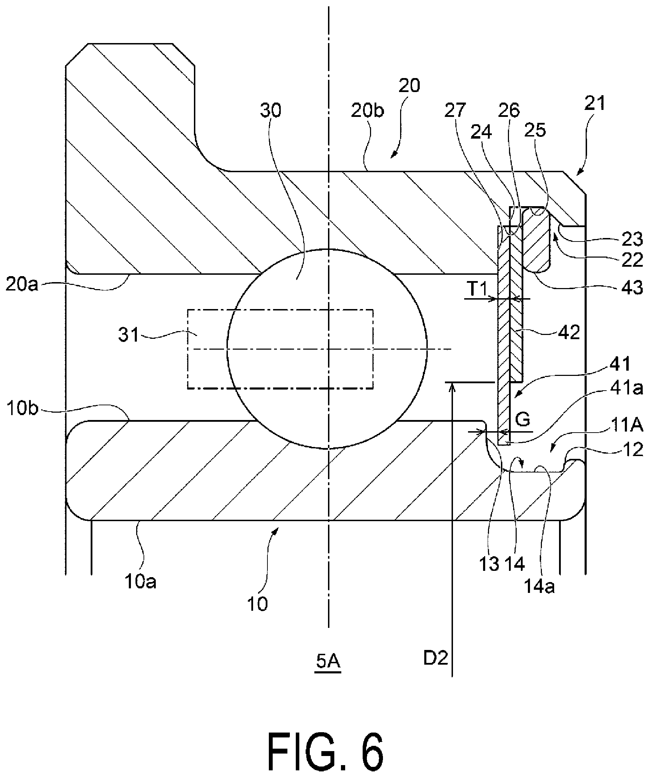

FIG. 6 is a partially enlarged cross-sectional view illustrating a schematic configuration of the ball bearing 5A as another example of the bearing according to the present invention used in the head part 2. In FIG. 6, the ball bearing 5A of the dental handpiece 1 in the stopped state is illustrated. That is, the compressed air does not act on the seal body 41 of the ball bearing 5A illustrated in FIG. 6, and the seal body 41 is not deformed. As illustrated in FIG. 6, the inner ring 10 of the ball bearing 5A includes a seal-opposed groove 11A different from the seal-opposed groove 11 of the ball bearing 5 described above.

As illustrated in FIG. 6, in a state where compressed air does not act on the seal body 41, that is, in a state where the seal body 41 is not deformed, the seal contact surface 13 of the seal-opposed groove side 11A is not in contact with the inner peripheral end part 41a of the seal body 41. That is, as illustrated in FIG. 6, in a state where compressed air does not act on the seal body 41, an annular gap G is formed between the inner peripheral end part 41a of the seal body 41 and the seal contact surface 13 of the seal-opposed groove 11A, and the inner peripheral end part 41a of the seal body 41 is opposed to the seal contact surface 13 of the seal-opposed groove 11A from the outer side in the axis x direction via the gap G.

The width W of the gap G is set such that, in a state where the dental handpiece 1 is stopped and the turbine blade 8 and the shaft member 7 rotate by inertia, when the inside of the ball bearing 5 becomes negative pressure, the seal body 41 is sucked by the negative pressure, and the inner peripheral end part 41a of the seal body 41 is pressed against the seal contact surface 13. Note that the width W of the gap G is a width of the gap G in the axis x direction. For example, the width W of the gap G is smaller than or equal to the thickness T1 of the seal body 41.

According to the ball bearing 5A, the seal body 41 contacts the seal contact surface 13 only when the inside of the ball bearing 5 becomes negative pressure in a state where the dental handpiece 1 is stopped and the turbine blade 8 and the shaft member 7 rotate by inertia. Therefore, a contact time of the seal body 41 with the seal contact surface 13 of the rotating inner ring 10 can be shortened, and wear of the seal body 41 between the seal contact surface 13 and the seal body 41 can be reduced. As a result, even when the inner diameter D2 of the support ring 42 is reduced and the inner peripheral end part 41a of the seal body 41 is made less likely to be deformed, the wear between the seal body 41 and the seal contact surface 13 can be reduced. Therefore, durability of the seal body 41 can be improved while improving braking performance of the seal body 41.

In addition, the ball bearing 5A can exhibit the same action as the action of the ball bearing 5 described above, and can exhibit the same effects as the effects of the ball bearing 5 described above.

Note that, in the above-described ball bearing 5, even when the inner peripheral end part 41a of the seal body 41 is not urged toward the seal contact surface 13 of the inner ring 10 in the stopped state of the dental handpiece 1, wear between the seal body 41 and the inner ring 10 can be reduced, and durability of the seal body 41 can be improved while improving braking performance of the seal body 41, as in the above-described ball bearing 5A. This is because a contact time of the seal body 41 with the seal contact surface 13 can be shortened when the dental handpiece 1 is driven or stopped.

Although the present invention has been described through the above embodiments, the technical scope of the present invention is not limited to the scope described in the above embodiments. It will be apparent to those skilled in the art that various modifications or improvements can be made to the above embodiments. Such modifications or improvements are also included in the technical scope of the present invention, and this is obvious from the recitation of the claims.

The embodiments described above are intended to facilitate understanding of the present invention and are not intended to be construed as limiting the present invention. The embodiments described above do not limit the use target of the present invention, and the present invention can include any objects as the use target. The components, arrangement, materials, conditions, shapes, sizes, and the like provided in the embodiments described above are not limited to those exemplified in the examples, and may be modified as appropriate. For example, the present invention includes differences occurring in the implementation of manufacturing tolerances or the like. In addition, components illustrated in different embodiments may be partially replaced or combined with each other to the extent that there is no technical conflict. The components can be appropriately and selectively combined so as to achieve at least part of the objects and the effects described above.

### Reference Signs List

1: dental handpiece, 2: head part, 3: tool, 4: rotation mechanism, 5, 5A: ball bearing, 6: housing, 7: shaft member, 8: turbine blade, 9: air supply port, 10: inner ring, 10a: inner peripheral surface, 10b: outer peripheral surface, 10c: raceway groove, 11, 11A: seal-opposed groove, 12: protrusion part, 12a: end edge, 13: seal contact surface, 14: recess part, 14a: cylindrical surface, 14b: inner side end part, 14c: outer side end part, 20: outer ring, 20a: inner peripheral surface, 20b: outer peripheral surface, 20c: raceway groove, 21: end part, 22: seal groove, 23: inclined surface, 24: annular surface, 25: bottom surface, 26: cylindrical surface, 27: annular surface, 30: rolling element, 31: retainer, 40: sealing member, 41: seal body, 41a: inner peripheral end part, 41b: outer peripheral end part, 42: support ring, 42a: inner peripheral end part, 43: snap ring, 43a: inner peripheral end part, D1, D2, D3, D4: inner diameter, G: gap, L1: minimum distance, T1: thickness, W: width, x: axis

## Claims

1. A bearing configured to support a shaft member provided with a turbine blade configured to rotate by receiving compressed air, the bearing comprising:
an inner ring;
an outer ring installed at an outer peripheral side of the inner ring;
a plurality of rolling elements interposed between the inner ring and the outer ring;
a retainer configured to retain the rolling elements with gaps in a circumferential direction; and
a sealing member having an annular shape around an axis x and provided between the inner ring and the outer ring so as to be able to close a space between the inner ring and the outer ring, wherein
the sealing member includes a support ring, the support ring being an annular member for supporting the sealing member at an outer peripheral side,
a seal-opposed groove having a seal contact surface, a recess part, and a protrusion part is formed at an outer peripheral surface facing the outer peripheral side of the inner ring,
the seal contact surface is capable of being contacted by an end part of an inner peripheral side of the sealing member from an outer side in the axial direction, and
the recess part extends in the axial direction at least in a region opposed to the support ring in a radial direction.

2. The bearing according to claim 1, wherein the seal contact surface is in contact with the end part of the inner peripheral side of the sealing member in a state not receiving the compressed air.

3. The bearing according to claim 1, wherein the seal contact surface is not in contact with the end part of the inner peripheral side of the sealing member in a state not receiving the compressed air.

4. The bearing according to any one of claims 1 to 3, further comprising a snap ring, the snap ring being an annular member for fixing the sealing member to the outer ring via the support ring,
wherein the recess part extends in the axial direction in a region opposed to the snap ring and the support ring in the radial direction.

5. The bearing according to claim 4, wherein
the protrusion part is adjacent to the seal contact surface from the outer side in the axial direction via the recess part, and the protrusion part is located farther outward than the snap ring in the axial direction, and
an outer diameter of the protrusion part is smaller than an inner diameter of the sealing member.

6. The bearing according to any one of claims 1 to 5, wherein a curved surface is formed at an end of an inner side of the protrusion part in the axial direction.

7. The bearing according to any one of claims 1 to 6, wherein an end of an outer side of the recess part in the axial direction is located farther outward than the end part of the inner peripheral side of the sealing member deformed by receiving the compressed air in the axial direction.

8. The bearing according to any one of claims 1 to 7, wherein a minimum distance between the end part of the inner peripheral side of the sealing member deformed by receiving the compressed air and the recess part or the protrusion part is larger than or equal to a thickness of the sealing member.

9. The bearing according to claim 8, wherein the minimum distance is 1.2 times or more the thickness of the sealing member.

10. The bearing according to any one of claims 1 to 9, wherein
the sealing member includes a seal body, the seal body being a member having an annular shape around the axis and having elasticity, and
a base material of the seal body is a resin obtained by impregnating a porous resin with an elastomer.

11. The bearing according to claim 10, wherein the base material of the seal body is a composite of porous polytetrafluoroethylene and perfluoroelastomer.

12. The bearing according to any one of claims 1 to 11, wherein the seal body has a hardness of Shore A 60 to 90 in accordance with JIS K 6253:2012.

13. The bearing according to claim 12, wherein the seal body has a hardness of Shore A 70 to 90 in accordance with JIS K 6253:2012.

14. The bearing according to any one of claims 1 to 13, wherein
the sealing member includes a seal body, the seal body being a member having an annular shape around the axis and having elasticity, and
the seal body has a thickness of 0.5 mm or less.

15. The bearing of claim 14, wherein the seal body has a thickness of 0.2 mm or less.

16. The bearing of claim 15, wherein the seal body has a thickness of 0.1 mm or less.

17. The bearing according to any one of claims 1 to 16, wherein
the sealing member includes a seal body, the seal body being a member having an annular shape around the axis and having elasticity, and
a radial length of a contact region between the seal body and the support ring is 1/2 or more and 3/4 or less of a radial width of the seal body.

18. The bearing of claim 17, wherein the radial length of the contact region between the seal body and the support ring is 2/3 or more and 3/4 or less.

19. The bearing according to any one of claims 1 to 18, wherein
the sealing member includes a seal body, the seal body being a member having an annular shape around the axis and having elasticity, and
a tear strength of a material of the seal body in accordance with JIS K 6252:2007 is 50 N/mm or more.

20. The bearing of claim 19, wherein the tear strength of the material of the seal body in accordance with JIS K 6252:2007 is 65 N/mm or more.

21. The bearing of claim 20, wherein the tear strength of the material of the seal body in accordance with JIS K 6252:2007 is 80 N/mm or more.

22. The bearing according to any one of claims 1 to 21, wherein
the sealing member includes a seal body, the seal body being a member having an annular shape around the axis and having elasticity, and
a tensile strength of a material of the seal body in accordance with JIS K 6251:2010 is 30 MPa or more.

23. The bearing according to any one of claims 1 to 22, wherein the shaft member is included in a rotation mechanism of a dental handpiece.

24. The bearing of claim 23, wherein
the bearing is each of a pair of bearings configured to support the shaft member with the turbine blade interposed between the pair of bearings, and
an inner side in the axial direction is a side of the turbine blade.
